# EUROPEAN PATENT APPLICATION

(11) **EP 4 703 446 A1**
(43) Date of publication of application: **04.03.2026**
(21) Application number: 24306397.1
(22) Date of filing: 25.08.2024
(51) Int. Cl.: C09J 5/02, B32B 7/12, B32B 21/14

(54) **METHODS OF MAKING A LAMINATE**

(71) Applicant: ARKEMA FRANCE, 92800 Puteaux (FR)
(72) Inventor: Wang, Xianping, Dublin, OH 43016 (US); Zhu, Tianxia, Dublin, OH 43016 (US); Martineau, Paul, Roxboro, H8Y (CA); Gareis, Bill, Mars, PA 16046 (US)
(74) Representative: Bandpay & Greuter

(57) **Abstract**

Disclosed herein is a method of making a laminate. The method may comprise providing a first substrate having a moisture cure adhesive on a first surface of the first substrate, preferably the moisture cure adhesive comprises a polyurethane adhesive, more preferably the polyurethane moisture cure adhesive comprises either a 1-component adhesive or a 2-component adhesive. The method also includes applying a primer at an application rate of at least about 5 g/ft² to a first surface of a second substrate, preferably the application rate comprises at least about 6 g/ft², more preferably at least about 8 g/ft², further preferably at least about 10 g/ft². The method further includes contacting the primer on the second substrate to the moisture cure adhesive on the first substrate.

## Description

### FIELD OF THE INVENTION

This application is directed to an adhesive system suitable for preparing laminates, preferably laminates in which at least one, or both, of the substrates is a wooden substrate. The wooden substrate may comprise an engineered wood substrate. More particularly, the application is directed to a process of making the laminate comprising a primer composition which is used to treat the surface of at least one of the substrates prior to forming the laminate with a moisture cure adhesive.

### BACKGROUND

The durability of adhesives for wood structural purposes has been regulated by, for instance, the American National Standards Institute (ANSI); the American Society for Testing Materials (ASTM) and the Canadian Standards Association (CSA). Polyurethane adhesives must meet these standards if they are to find utility as adhesives in structural wood products.

U.S. Pat. No. 5,543,487 (Vick et al.) discloses a hydroxymethylated resorcinol coupling agent including a formaldehyde-based, hydroxymethylated resorcinol as an active ingredient, which enables commercial thermosetting adhesives, such as bisphenol-A epoxy, phenol-resorcinol-formaldehyde, emulsion-polymer isocyanate, phenol-formaldehyde and resorcinol-formaldehyde, to develop bonds to a variety of untreated and treated woods. To form the coupling agent, formaldehyde and resorcinol are reacted under mildly alkaline conditions in situ for between 4 and 6 hours at a temperature between 65°F and 85°F before application to wood surfaces at the spread rate of 150 g/m². In total the bonding process takes on the order of days and is too slow for economical application in a production plant. Moreover, the reactant formaldehyde is a known human carcinogen and its use necessitates precautionary and expensive plant construction.

International Patent Application Publication No. WO2007/095670 (Commonwealth Scientific and Industrial Research Organization) relates to a waterborne primer composition comprising polyamine-preferably a polyethyleneimine of molecular weight in the range of from 500 to 3 million-and having a pH of at least 11.5. Also disclosed is a method of improving the bonding of wood with coatings such as electrostatic coatings and to adhesives using this primer composition. In the various listed embodiments, the wood specimens required sanding prior to the application of the primer: this is problematic because sanding is not usually carried out at plant scale nor is it allowed by official norms for structural wood products, and perhaps more so here as it is a two-step sanding process consisting of coarse sanding using first a coarse 80-grit sanding paper followed by fine sanding with a 150-grit sanding paper.

US Pat. No. 9,649,826 (Henkel GmbH) discloses an adhesive system for preparing lignocellulosic composites comprising a) an aqueous primer composition and, b) a polyurethane adhesive composition, wherein the aqueous primer composition comprises: from 0 to 25 wt%, by weight of the composition, of a polyol selected from the group consisting of water soluble polyols, water dispersible polyols, water emulsifiable polyols and mixtures thereof, wherein said polyols have a molecular weight less than 5000 Daltons; and, up to 10 wt%, by weight of the composition, of a surfactant selected from the group consisting of water soluble surfactants, water emulsifiable surfactants and mixtures thereof, with the proviso that the aqueous primer composition must comprise at least one of said polyol or a surfactant having hydroxyl functionality and a molecular weight of less than 5000 Daltons.

Thus there remains a need to develop methods and/or primer compositions which can be used to enhance the adhesion strength, in particular the wet adhesion strength of a moisture cure adhesive which does not suffer the aforementioned disadvantages of the prior art.

### BRIEF DESCRIPTION

A method of making a laminate is described herein. The method may comprise providing a first substrate having a moisture cure adhesive on a first surface of the first substrate, preferably the moisture cure adhesive comprises a polyurethane adhesive, more preferably the polyurethan moisture cure adhesive comprises either a 1 component adhesive or a 2 component adhesive. Further preferably an assembly time of the moisture cure adhesive comprises no more than about 30 minutes, preferably no more than about 20 minutes, more preferably no more than about 15 minutes, further preferably no more than about 10 minutes, even more preferably less than about 6 minutes. The method also includes applying a primer at an application rate of at least about 5 g/ft² to a first surface of a second substrate, preferably the application rate comprises at least about 6 g/ft², more preferably at least about 8 g/ft², further preferably at least about 10 g/ft². The method further includes contacting the primer on the second substrate to the moisture cure adhesive on the first substrate. Preferably the contacting occurs within less than 15 minutes of the applying, preferably within about 10 minutes, more preferably less than about 5 minutes, further preferably less than about 3 minutes, even more preferably no more than about 2 minutes, further preferably no more than about 1 minute after the applying. Alternatively, the contacting occurs while the primer on the second substrate visually appears not dry; or the contacting occurs prior to the primer drying, preferably the primer visually appears damp.

A second method of making a laminate included herein includes providing a first substrate having a moisture cure adhesive on a first surface of the first substrate, preferably the moisture cure adhesive comprises a polyurethane adhesive, more preferably the polyurethane moisture cure adhesive comprises either a 1 component adhesive or a 2 component adhesive. It is also preferred that an assembly time of the moisture cure adhesive comprises no more than about 30 minutes, preferably no more than about 20 minutes, more preferably no more than about 15 minutes, further preferably no more than about 10 minutes, even more preferably less than about 6 minutes. Additionally, the method includes applying a primer at an application rate of at least about 3 g/ft² to a first surface of a second substrate, preferably the application rate comprises at least about 5 g/ft², more preferably at least about 8 g/ft², further preferably at least about 10 g/ft².

The method may also include crowding the primer on the second substrate to the moisture cure adhesive on the first substrate, thereby forming the laminate. In one embodiment, preferably the crowding occurs within less than about 5 minutes, further preferably less than about 3 minutes, even more preferably no more than about 2 minutes, further preferably no more than about 1 minute after the applying. In an alternate embodiment, preferably, the crowding occurs while the primer on the second substrate visually appears not dry. In a further alternate embodiment, preferably, alternatively, the crowding occurs prior to the primer drying, preferably the primer visually appears damp.

In any one of the embodiments, preferably the crowding occurs at a rate of more than about 20 joints/minute, preferably more than about 30 joints/minute, more preferably more than about 45 joints/minute, more preferably at least about 60 joints/minute, more preferably at least about 75 joints/minute, more preferably at least about 80 j oints/minute, further preferably at least about 100 joints per minute, even more preferably at least about 125 joints per minute or at least about 150 joints/minute.

The method may also include transporting the laminate at line speed of at least about 500 fpm (feet per minute), preferably at least about 550 fpm, more preferably at least about 600 fpm, further preferably at least about 650 fpm and even more preferably at least about 700 fpm.

It is further preferred that a failure rate for any of the above methods comprises no more than about 10%, preferably less than about 10%, more preferably no more than about 8%, more preferably less than about 7%, more preferably no more than about 5%, further preferably less than about 5%, even more preferably less than about 3%, even more preferably less than about 2%, even more preferably no more than about 1%, even further preferably less than about 1%.

Embodiments of the laminate described herein have improved wet strength. Preferably such laminate embodiments are able to withstand the vibrations experienced during processing such as planing, surfacing, profiling, cutting and/or transportation.

Embodiments formed in accordance with the methods described herein have exhibited fewer failures, preferably the failure rates of the embodiments described herein is less than about 10%, more preferably less than about 8%, further preferably less than about 6%, even more preferably less than about 4%, even further preferably less than about 2%, and most preferably less than about 1%. An example of failures includes the laminate experiencing an adhesive failure, e.g., the laminate separating at the joint. Another mode of failure is the adhesion at the joint loosening, resulting in the laminate not having sufficient strength for its intended purpose.

A further advantage of practicing the methods herein is an increase in productivity. The methods herein may enable engineered wood manufacturers to operate at higher line speeds. Such higher line speeds may be determined in terms of feet per minute ("fpm") and/or joints per minute ("jpm"), preferably the manufacturer is able to produce at higher lines speeds with a reduced failure rate, preferably the above failure rates of less than about 10%, more preferably less than about 8%, further preferably less than about 6%, even more preferably less than about 4%, even further preferably less than about 2%, and most preferably less than about 1%, are applicable to the higher line speed.

Practicing the above methods may also lead to less expensive adhesive compositions, such as adhesive compositions having less fillers than traditional adhesive compositions to such adhesive compositions being filler free with respect to fillers used to increase strength.

Additionally practicing the methods disclosed herein may lead to reduced processing costs per unit of the substrates, preferably the substrates are wooden substrates, more preferably engineered wood substrates. Thereby, resulting in reduced costs for such laminates.

Another benefit of the methods disclosed herein is reduced penetration time. Penetration time is the time period between applying the primer and contacting (e.g., "crowding") the substrates together. The methods disclosed herein may be practiced with a reduced penetration time as compared to traditional processing.

Non-limiting examples of the types of products the laminates described herein may be formed into include I-joist, cross laminated timber (CLT) and a glulam beam.

### DEFINITIONS

In the present text, "adhesive" and "adhesive composition" have the same meaning and are used interchangeably. Likewise, "primer composition" and "primer" have the same meaning and are used interchangeably.

As used herein EN 391 refers to European Standard EN 391:2001 entitled *"Glued laminated timber-Delamination test of glue lines".*

As used herein CSA 112.9 refers to Canadian Standard Association (CSA) Standard 112.9 entitled *"Standard Specification for Evaluation of Adhesivesfor Structural Wood Products* (*Exterior Exposure*)".

As used herein ASTM D2559 refers to American Society for Testing Materials ASTM Standard D2559-04 entitled "Standard Specification for Adhesives for Structural Laminated Wood Products for Use Under Exterior (Wet Use) Exposure Conditions".

As used herein ASTM D5751 refers to American Society for Testing Materials ASTM Standard D5751-99 (2012) entitled *"Standard Specification for Adhesives Used for Laminate Joints in Nonstructural Lumber Products*".

As used herein ANSI 405-2008 refers to American National Standards Institute ANSI Standard 405-2008 entitled *"Standard for Adhesives for Use in Structural Glued Laminated Timber".*

A failure may for example be determined by carrying out a proof load test according to BS EN 12811.

The recital of HLB (hydrophilic-lipophilic balance) herein may refer to calculated HLB values. These values may be calculated according to the methodology of W. C. Griffin "Calculation of HLB Values of Non-Ionic Surfactants," Journal of the Society of Cosmetic Chemists 5 (1954): 249. For blended components, the HLB value will be the weighted average of the HLB values for each component.

As used herein, the term "surfactant" may mean a compound that, when dissolved in a liquid, reduces the surface tension of the liquid, which reduces the interfacial tension between two liquids or which reduces surface tension between a liquid and a solid. Typically the term "surfactant" may be used herein to refer to a compound that, when dissolved in water, reduces the surface tension of the water.

The term "assembly time" as used herein may be defined as the time between the application of the primer until the application of the full pressure of the contacting step thereby forming the laminate.

The term "polyol" as used herein shall include diols and higher functionality hydroxyl compounds.

The hydroxyl (OH) values given herein may be measured according to Japan Industrial Standard (JIS) K-1557, 6.4.

The isocyanate content values (NCO content) given herein may be measured according to EN ISO 11909.

Viscosities of the adhesive compositions and of prepolymers as described herein may be determined according to the following procedure: measured using the Brookfield Viscometer, Model RVT at standard conditions of 20°C and 50 percent Relative Humidity (RH). The viscometer is calibrated using silicone oils of known viscosities, which vary from 5,000 cps to 50,000 cps. A set of RV spindles that attach to the viscometer are used for the calibration. Measurements of the composition or prepolymer are done using the No. 6 spindle at a speed of 20 revolutions per minute for 1 minute until the viscometer equilibrates. The viscosity corresponding to the equilibrium reading is then calculated using the calibration.

As used herein the term "lignocellulosic material/substrate" is intended to mean a woody material, including but not limited to: wooden boards; chemically treated wooden boards, for example acetylated wooden boards; wood veneers; wood fibers; wood strips; wood flakes; wood particles; comminuted agricultural wastes such as rice hulls, bagasse and straw; other wood based composites; and, combinations thereof.

### DETAILED DESCRIPTION

The present disclosure relates to methods of making a laminate. The methods comprise at least 1. a step of providing a first substrate having a moisture cure adhesive on a first surface of the first substrate, 2. a step of applying a primer to a first surface of a second substrate and 3. a step of contacting the primer on the second substrate to the moisture cure adhesive on the first substrate. The contacting step preferably comprises, or consists of, crowding the primer on the second substrate to the moisture cure adhesive on the first substrate.

### Primer composition

The primer composition may comprise, or be, a homogeneous composition and/or a heterogenous composition. Alternatively, the primer composition may consist of 1 component or a blend of 2 or more components. When the primer composition is in the form of the blend of 2 or more components the blend may be a solution or a dispersion.

The primer composition may comprise at least about 75 wt% and more typically at least about 90 wt%, by weight of the primer composition, of water. This water can be tap water, de-ionized water, de-mineralized water or a mixture thereof. In particular, the primer composition may comprise water in an amount of at least about 95 wt%, in particular at most about 99 wt%, more particularly at most about 98 wt%, based on the total weight of the primer composition. In some embodiments, the primer composition can comprise water in an amount of about 75 to 99 wt%, preferably from about 90 to about 99 wt%, more preferably from about 90 to about 98 wt%, even more preferably from about 95 to about 98 wt%, of water, based on the total weight of the primer composition, such as from about 75 to about 80 wt%, or from about 80 to about 85 wt%, or from about 85 to about 90 wt%, or from about 90 to about 94 wt%, or from about 94 to about 95 wt%, or from about 95 to about 96 wt%, or from about 96 to about 96.5 wt%, or from about 96.5 to about 97 wt%, or from about 97 to about 97.5 wt%, or from about 97.5 to about 98 wt%, or from about 98 to about 98.5 wt%, or from about 98.5 to about 99 wt%, of water.

The primer composition may optionally comprise up to about 10 wt% (based on the total weight of the primer composition) of a co-solvent. This co-solvent may operate to diminish the raising of the natural grain of the wood substrate to which the primer composition is applied; in the absence of co-solvents, very high water content in the applied composition can promote raising of the grain.

The primer composition may have a pH whereby it does not cause acid wood damage nor does it discolor the wood, as is known with strongly alkaline compositions. In practice, the primer composition may typically have a pH in the range from 6 to 8 and preferably from 6.5 to 7.5.

The primer composition may be an aqueous composition. Advantageously, the primer composition, preferably the aqueous primer composition, comprises at least one surfactant. The primer composition may consist of water and the at least one surfactant.

The aqueous primer composition may be formulated by simple mixing the various components. This mixing may occur in advance of the application of the primer composition to the surface of the substrate. The aqueous primer composition may be applied to the surface of the substrate as a solution. In an alternative embodiment, the aqueous primer composition can be prepared within a rinse stream just prior to or during contact with the substrate surface. For example, a certain quantity of the surfactant(s) can be injected into a continuous stream of water and, optionally, co-solvent to form the aqueous primer compositions.

In some embodiments, the primer composition (preferably the aqueous primer composition) comprises up to about 25 wt%, preferably up to about 10 wt%, more preferably up to about 5 wt%, even more preferably at least about 1 wt%, even further preferably at least about 2 wt%, of surfactant. Thus, the primer composition may comprise from about 1 to about 25 wt%, preferably from about 1 to about 10 wt%, more preferably from about 2 to about 10 wt%, even more preferably from about 2 to about 5 wt%, of surfactant (based on the total weight of the primer composition). For example, the primer composition may comprise from about 1 to about 1.5 wt%, or from about 1.5 to about 2 wt%, or from about 2 to about 2.5 wt%, or from about 2.5 to about 3 wt%, or from about 3 to about 3.5 wt%, or from about 3.5 to about 4 wt%, or from about 4 to about 5 wt%, or from about 5 to about 6 wt%, or from about 6 to about 10 wt%, or from about 10 to about 15 wt%, or from about 15 to about 20 wt%, or from about 20 to about 25 wt%, of surfactant.

The choice of such surfactants is not intended to be limited. The at least one surfactant may be functional or non-functional. For instance, the surfactant may or may not contain functional groups which are reactive to isocyanate moieties. They may have a number average molecular weight (Mn) of up to about 100,000 Daltons, one exemplary range of a number average molecular weight (Mn) for the surfactant is from about 400 to about 25000 Daltons, as determined by means of gel permeation chromatography against a polystyrene standard. Surfactants meeting this criteria can be found, for instance, in Surfactants and Interfacial Phenomena, Second Edition, M. J. Rosen, 1989, John Wiley and Sons, Inc., New York, pages 1-32, the entire disclosure of which is incorporated herein by reference. For instance, the surfactants may have a number average molecular weight (Mn) from about 400 to about 1500 Daltons, or from about 1500 to about 5000 Daltons, or from about 5000 to about 10000 Daltons, or from about 10000 to about 15000 Daltons, or from about 15000 to about 20000 Daltons, or from about 20000 to about 25000 Daltons, or from about 25000 to about 50000 Daltons, or from about 50000 to about 100,000 Daltons.

Preferably, the at least one surfactant is selected from the group consisting of water soluble surfactants, water emulsifiable surfactants and mixtures thereof.

Preferably, the at least one surfactant comprises at least one anionic surfactant, at least one nonionic surfactant, at least one amphoteric surfactant or a combination thereof. The surfactants of the primer composition may in particular be selected from anionic surfactants, nonionic surfactants, amphoteric surfactants and combinations thereof. More preferably, the at least one surfactant comprises a blend of at least two surfactants selected from anionic surfactants, nonionic surfactants and amphoteric surfactants.

The at least one surfactant may comprise at least one polyol, and more preferably said at least one polyol comprises, or is, at least one water soluble polyol. The polyol may for example be chosen from the polyol surfactants mentioned below, such as the alkyl polyglucosides.

In some embodiments, preferred surfactants may be selected from the group consisting of: siloxane-based surfactants; alkyl polyglucosides, including alkylpolysaccharides; alkoxylated fatty acids; alkoxylated alcohols; alkylsulfosuccinates; acetylenic diol-based surfactants; alkyl ethoxylates such as alkyl phenol ethoxylates; and mixtures thereof.

Suitable siloxane-based surfactants include silicon surfactants compatible with aqueous systems. Such surfactants include, but are not limited to, silicone polyoxyalkylene copolymers, organosilicone-polyether copolymer surfactants, and the like. In certain embodiments, preferred siloxane-based surfactants include BYK^{®} surfactants available from BYK Chemie GmbH and Tego^{®} surfactants available from Evonik Industries, of which BYK^{®} 347 and 348 and Tego^{®} Wet 280 and Wet 265 might be specifically noted. Other silicon surfactants can be identified for example in Hill (1999) Silicon Surfactants, Marcel Decker, N.Y.

As noted, the primer composition may contain one or more alkyl polyglucoside surfactants which may preferably have a naturally derived alkyl substituent, such as coconut fatty alcohol or a distilled cut of a natural fatty alcohol. Suitable alkyl polyglucoside surfactants, including alkylpolysaccharides, are disclosed in inter alia U.S. Pat. No. 5,776,872 (Giret et al.); U.S. Pat. No. 5,883,059 (Furman et al.); U.S. Pat. No. 5,883,062 (Addison et al.); and, U.S. Pat. No. 4,565,647 (Llenado), all of which are incorporated herein by reference in their entirety. Exemplary commercially available alkyl polyglucosides surfactants include: Triton^{®} CG110 available from Dow Chemical Company; AG6202^{®} available from Akzo Nobel; and, Alkadet 15^{®} available from Huntsman Corporation.

Exemplary alkylsulfosuccinate surfactant compounds include the salts of mono-esters of sulfosuccinic acid, the salts of di-esters of sulfosuccinic acid -each of which may, optionally, be alkoxylated- as well as mixtures thereof. Exemplary sulfosuccinate surfactant compounds include disodium monooctylsulfosuccinate, sodium dioctylsulfosuccinate, disodium lauryl sulfosuccinate, disodium laureth sulfosuccinate, disodium laurimide (MEA) sulfosuccinate, disodium mono-alkylphenyl ether sulfosuccinate, and mixtures thereof.

Alkoxylated fatty acid surfactants are also suitable. Generally the fatty acid portion of such alkoxylated fatty acid surfactants is derived from a saturated or unsaturated mono- or di-fatty acids, typically a C₆-C₃₀ fatty acid such as lauric acid, myristic acid, palmitic acid, stearic acid, oleic acid, linoleic acid, behenic acid, erucic acid. Such acids may be derived from vegetable oils, such as, for example, tall oil, rapeseed oil, canola oil, soy oil, coconut oil, castor oil, corn oil, olive oil, sunflower oil, cottonseed oil, palm oil, peanut oil, sesame oil, safflower oil, linseed oil, flax seed oil, palm kernel oil, and mixtures thereof. These fatty acids are alkoxylated with from 2 to 20 moles, more typically from 5 to 20 moles, of a C₂-C₄ alkylene oxide, more typically, ethylene oxide.

Appropriate alkoxylated alcohol surfactant compounds for use in herein may include but are not limited to ethoxylated (15) tridecyl alcohol, ethoxylated (7) lauryl alcohol, ethoxylated (20) oleyl alcohol, ethoxylated (15) stearyl alcohol, and mixtures thereof.

Acetylenic diol-based surfactants are surfactants which can be acetylenic diols comprising hydrophobic groups at the end of the acetylenic spacer and hydrophilic and/or hydrophobic ethers hanging off of the hydroxyl groups. Examples of acetylenic diol-based surfactants include, 2,4,7,9-tetramethyl-5-decyne-4,7-diol (TMDD), 2,5,8,11 -tetramethyl-6-dodecyne-5,8-diol, their derivatives, and their mixtures. And valued examples of commercial acetylenic diol-based surfactants include the Dynol^{™} series (e.g. Dynol 604) and Surfynol^{®} series available from Air Products.

Similarly, alkyl ethoxylates may be used as the surfactant, preferably alkyl phenol ethoxylates. Suitable examples of the alkyl ethoxylates that can be used in the primer composition of the present disclosure can include, but are not limited to, tristyrylphenol ethoxylates, polyethoxylated tallow amine, decyl alcohol ethoxylates, undecyl alcohol ethoxylates, tridecyl alcohol ethoxylates, propylheptanol alcohol ethoxylates, amide ethoxylates, cocoamine ethoxylates, nonyl phenol ethoxylates, ethoxylated octyl phenol, castor oil ethoxylates, sorbitan ester ethoxylates, tridecyl alcohol alkoxylates, tall oil fatty acid ethoxylates, lauryl alcohol ethoxylates, ethoxylated phenol, and mixtures thereof. Examples of the alkyl phenol ethoxylates include, but are not limited to, tristyrylphenol ethoxylates, nonyl phenol ethoxylates, ethoxylated octyl phenol, and combinations thereof. In one non-limiting embodiment of the present disclosure, the alkyl phenol ethoxylates can be ethoxylated octylphenol.

In accordance with a preferred embodiment of the present invention, the surfactant of the primer composition may be a mixture of alkylsufosuccinates and acetylenic diols commercially available under the trade name Surfynol PSA-336 from Air Products.

Optionally the primer composition may comprise at least one polyol. In some embodiments, the polyol disclosed herein may serve as the surfactant as described above. The primer composition may comprise up to about 25 weight percent, normally up to about 20 weight percent and preferably from about 0.1 to about 5 weight percent (such as from about 0.1 to about 1 wt%, or from about 1 to about 2 wt%, or from about 2 to about 3 wt%, or from about 3 to about 5 wt%, or from about 5 to about 10 wt%, or from about 10 to about 15 wt%, or from about 15 to about 20 wt%, or from about 20 to about 25 wt%) of polyol. The polyol is preferably selected from the group consisting of water soluble polyols, water dispersible polyols, water emulsifiable polyols and mixtures thereof. The polyols may be di- or poly-functional hydroxy compounds which may be polymeric or not.

The polyols preferably have a weight average molecular weight of 5000 Daltons or less, preferably about 3000 Daltons or less, more preferably about 2000 Daltons or less, further preferably less than about 1000 Daltons. Typically the selected polyols should be stable at temperatures up to 120°C. Further, in a preferred embodiment, the polyol is characterized by a hydrophilic-lipophilic balance (HLB), as defined by Griffin above, of at least 10, for example 12 or higher.

Nonexclusive examples of suitable polyols include ethylene glycol, diethylene glycol, triethylene glycol, propylene glycol, dipropylene glycol, 1,2-butanediol, 1,3-butanediol; 1,4-butanediol or tetramethylene glycol, 2,3-butanediol, 1,4-hexanediol, pentamethylene glycol, hexamethylene glycol, neopentyl glycol, hexylene glycol, pentaerythritol, dispentaerythritol, trimethyol propane and mixtures thereof.

The polyols may equally comprise polyalkylene glycols having the formula HO(CH₂CH₂O)ₙH or HO(CH₂CH₂CH₂O)ₙH wherein n is preferably a positive integer of from 2 to 30, or more usually from 2 to 25. And the use of glycol esters of fatty acids, such as lauric, palmitic, stearic, and myristic acids, might also be mentioned.

The use of amine polyols is also not precluded. This group includes the low molecular weight amine polyols (having for example a molecular weight of 200 g/mol or less), such as diethanol amine, triethanol amine and N-methyl-N,N'-diethanol amine, but also amine polyols obtained by the addition reaction of an amino compound such as ethylenediamine, 1,3-propanediamine and 1,6-hexanediamine with an alkylene oxide (e.g., propylene oxide (PO) and/or ethylene oxide (EO)).

In another embodiment, the polyols include monosaccharides, which are glycerols (trihydric monosaccharides having three hydroxyl groups) and/or sugar alcohols (having more than three hydroxyl groups), and oligosaccharides. In a still further embodiment, the polyols may be acid, acid salt, fatty acid (such as alkyl glycosides), alcohol, alkyl and amine (such as glycosylamines) derivatives of monosaccharides and oligosaccharides.

Specific examples of polyols falling within these definitions include, but are not limited to, mannitol, sorbitol, xylitol, glycerol, glucose, fructose, maltose, lactose, tagatose, psicose, galactose, xylose, allose, ribose, arabinose, rhamose, mannose, altrose, ribopyranose, arabinopyranose, glucopyranose, gulopyranose, galatopyranose, psicopyranose, allofuranose, gulofuranose, galatofuranose, glucosamine, chondrosamine, galactosamine, ethyl-hexo glucoside, methyl-hexa glucoside, aldaric acid, sodium aldarate, glucaric acid, sodium glucarate, gluconic acid, sodium gluconate, glucoheptonic acid, sodium glucoheptonate, and mixtures thereof. It will be appreciated that derivatives of these relatively simple polyols will also find use in the inventive methods and compositions. Suitable derivatives include, but are not necessarily limited to, acid, acid salt, alcohol, alkyl, and amine derivatives of these saccharides, and mixtures of polyols and/or the derivatives thereof. Specific examples of suitable derivatives include, but are not necessarily limited to, alkyl glucosides, alkyl polyglucosides, alkyl glucosamides, alkyl glucosamines, alkyl sorbitans, alkyl sorbitols, alkyl glucopyranosides, alkyl maltosides, alkyl glycerols and mixtures thereof.

Illustrative commercial polyols which have found utility in the present invention include: Tween^{™} 20, Tween^{™} 81 and Synperonic^{™} T-304 and T-701, available from Croda International; Simulsol^{™} ADM 21, available from Seppic; Quadrol^{™} L from BASF AG; and, Surfynol^{™} PSA-336 available from Air Products.

### Adhesive composition

Most preferably, the adhesive composition used in the methods of the present disclosure is a moisture cure adhesive composition. Preferably, the moisture cure adhesive composition comprises, or is, a polyurethane adhesive composition. The adhesive composition may be any appropriate polyurethane adhesive composition.

Preferably, the moisture cure adhesive composition, preferably the polyurethane adhesive composition, comprises, or is, a one-component adhesive or a two-component adhesive.

The moisture cure adhesive composition has advantageously an assembly time of no more than about 30 minutes, preferably no more than about 20 minutes, more preferably no more than about 15 minutes, further preferably no more than about 10 minutes, even more preferably less than about 6 minutes.

Preferably, the adhesive composition comprises at least a prepolymer having free NCO groups, which is preferably obtainable from reacting at least one component A comprising a compound reactive toward isocyanates (in particular a polyol) and at least one component B comprising an isocyanate (in particular a polyisocyanate).

The component B comprising an isocyanate is preferably a polyisocyanate. The polyisocyanate can include any isocyanate compounds, which contains two or more isocyanate groups. Further, the components B can be polyisocyanates including aromatic, aliphatic, arylaliphatic polyisocyanates or mixtures thereof. The polyisocyanates can be diisocyanates that include aliphatic, cycloaliphatic, aromatic or aliphatic-aromatic diisocyanates. Suitable examples of the aliphatic and cycloaliphatic diisocyanates can include, but are not limited to, ethylene diisocyanate, ethylidene diisocyanate, propylene diisocyanate, butylene diisocyanate, trimethylene diisocyanate, cyclopentylene-1,3-diisocyanate, cyclo-hexylene-1,4-diisocyanate, cyclohexylene-1,2-diisocyanate, dichlorohexa-methylene diisocyanate, furfurylidene diisocyanate, 1,4-tetramethylene diisocyanate, 1,6-hexamethylene diisocyanate, 2,2,4-trimethyl-1,6-hexamethylene diisocyanate, 1,12-dodecamethylene diisocyanate, 1-isocyanato-2-isocyanatomethyl cyclopentane, 1-isocyanato-3-isocyanato-methyl-3,5,5-trimethylcyclohexane (isophorone diisocyanate or IPDI), bis-(4-isocyanatocyclohexyl)-methane, 2,4'-dicyclohexylmethane diisocyanate, 1,3- or 1,4-bis-(isocyanatomethyl)-cyclohexane, bis-(4-isocyanato-3-methylcyclohexyl)-methane, α',α',α',α'-tetramethyl-1,3- and/or -1,4-xylylene diisocyanate, 1-isocyanato-1-methyl-4(3)-isocyanatomethyl cyclohexane, 2,4- or 2,6-hexahydrotoluylene diisocyanate, and the like.

Similarly, suitable examples of the aromatic and aliphatic-aromatic diisocyanates can include, but are not limited to, 2,4- and/or 2,6-toluene diisocyanate, diphenyl methane-2,4'-and/or 4,4'-diisocyanate (MDI); 2,2-diphenylpropane-4,4'-diisocyanate, xylylene diisocyanate, 1,4-naphthylene diisocyanate, 1,5-naphthylene diisocyanate, m-phenylene diisocyanate, p-phenylene diisocyanate, diphenyl-4,4'-diisocyanate, azobenzene-4,4'-diisocyanate, diphenylsulphone-4,4'-diisocyanate, 2,4-tolylene diisocyanate, 1-chlorobenzene-2,4-diisocyanate, 4,4',4"-triisocyanatotriphenylmethane, 1,3,5-triisocyanato-benzene, 2,4,6-triisocyanato-toluene, 4,4'-dimethyldiphenyl-methane-2,2',5,5-tetratetraisocyanate, and modified aromatic diisocyanates containing carbodiimide groups, urethane groups, allophanate groups, isocyanurate groups, urea groups or biuret.

In one non-limiting embodiment of the present disclosure, the isocyanate compound can be diphenyl methane diisocyanate (MDI). The diphenyl methane diisocyanate (MDI) can be used in monomeric form or in polymeric form. The monomeric form of MDI can comprise diphenyl methane-2, 4'-diisocyanate (also called 2, 4' isomer herein) or diphenyl methane-4,4'-diisocyanate (also called 4, 4' isomer herein) or mixtures thereof. In one non-limiting embodiment of the present disclosure, the component B is polymeric MDI (pMDI). The polymeric MDI used in the present disclosure can have an average isocyanate functionality of at least about 2. The isocyanate functionality of the polyisocyanate component can vary in the range of from about 2.0 to 3.0.

The component A comprising a compound reactive toward isocyanates preferably comprises, or is, a polyol.

Some examples of the polyol may comprise a polyether, preferably the polyether comprises a polyol ether diol, more preferably the polyol ether diol comprises a plurality of primary diols, further preferably the polyol ether diol comprises a bisphenol A component, even more preferably wherein the polyol ether diol having the bisphenol A component comprises a plurality of primary hydroxyl units.

Further examples of the polyol that may be used for preparing the composition of the present disclosure can be polyols suitable for making polyurethanes. They can be polyols based on polyalkylimide oxides, polyester or combinations thereof, which can include bulky side chains and/or long hydrophobic chains. The polyols based on polyalkylene oxides are often referred to as polyether polyols. The polyols can also include polyamide polyols, polycaprolactone polyols such as poly-ε-caprolactone polyol, polycarbonate polyols, hydroxyl terminated polybutadienes such as fully-hydrogenated hydroxy-terminated polybutadiene and/or partially-hydrogenated hydroxy-terminated polybutadiene, polyisobutylene diols, as well as mixtures thereof.

Further polyether polyols can include a linear and/or branched polyether having hydroxyl groups. Examples of the polyether polyols may include substituted and/or unsubstituted polyoxyalkylene polyols such as polyethylene glycol, polypropylene glycol, polybutylene glycol and the like. Further, a homopolymer and/or a copolymer of the polyoxyalkylene polyols may also be employed. Particularly, the copolymers of the polyoxyalkylene polyols may include an adduct having at least one compound selected from the group consisting of ethylene glycol, propylene glycol, diethylene glycol, dipropylene glycol, triethylene glycol, 2-ethylhexanediol-1,3-glycerin, 1,2,6-hexane triol, trimethylol propane, trimethylol ethane, tris(hydroxyphenyl)propane, triethanolamine, triisopropanolamine, ethylenediamine and ethanolamine; with at least one compound selected from the group consisting of ethylene oxide, propylene oxide and butylene oxide.

The polyether polyols can include polymers of propylene oxides and/or copolymers of ethylene and propylene oxides. In one non-limiting embodiment, the polyether polyol is ethylene oxide capped polypropylene oxide.

The polyether polyol may be an amphiphilic block copolymer. The amphiphilic block polymer means a copolymer characterized by a hydrophilic block that is chemically tethered to a hydrophobic block. Suitable examples of the hydrophilic block segments can include, but are not limited to, polyethylene oxide (PEO) block, polyacrylamide (PAM) block, polyester blocks, polyamide blocks, and polysaccharide blocks. Suitable examples of the hydrophobic block segment can include, but are not limited to, polypropylene oxide (PPO) blocks, poly(methylmethacrylate) (PMMA) blocks, poly(styrene) blocks, polyvinylchloride blocks, polyethylene blocks, and polydimethylsiloxane blocks. In one non-limiting embodiment of the present disclosure, the hydrophilic block segment can be PEO block. In another non-limiting embodiment of the present disclosure, the hydrophobic block segment can be PPO block.

Further, the polyether polyol block copolymer according to the present disclosure can be a diblock, triblock or a tetrablock copolymers. In one non-limiting embodiment of the present disclosure, the polyether polyol block copolymer can be a triblock polymer. In one non-limiting embodiment of the present disclosure, the polyether polyol triblock copolymer can be derived from ethylene oxide (EO) and propylene oxide (PO) repeating units. The polyether polyol block copolymer according to the present disclosure can be a poly(ethylene oxide)-poly(propylene oxide)-poly(ethylene oxide) block copolymer (PEO-PPO-PEO) or a polypropylene oxide)-poly(ethylene oxide)-poly(propylene oxide) (PPO-PEO-PPO) block copolymer.

In one non-limiting embodiment of the present disclosure, the ethylene oxide (EO) and propylene oxide (PO) repeating units can be present in a weight ratio of from about 1:10 to about 10:1. In one embodiment of the present disclosure, the weight ratio can vary in the range of from about 1:5 to about 5:1 or from about 1:3 to about 3:1 or from about 1:2 to about 2:1, in certain embodiments the ratio may be up to about 10:1 or up to about 5:1.

The polyether polyols used in the present disclosure may include one or more 2-functionality polyether polyols, one or more 3-functionality polyether polyols, one or more 4-functionality polyether polyols, or combinations thereof. The number average molecular weight of the 2-functionality polyether polyols can be varied from about 2,000 to about 20,000 Daltons, or in a range of about 2,000-12,000 Daltons. For example, Pluracol^{®} P2010 is a polyether polyol having a number average molecular weight of 2,000 Daltons, which is commercially available from BASF. PPG 2000 available from PPG is another example of a suitable polyether polyol. The number average molecular weight of the 3-functionality polyether polyols can be varied from about 84 to about 20,000 Daltons or in a range of about 100-12,000 Daltons, including Pluracol^{®} TP-440 polyol commercially available from BASF. The number average molecular weight of the 4-functionality polyether polyols can be varied from about 100 to about 20,000 Daltons or in a range of about 400-12,000 Daltons. For example, Pluracol^{®} 355 is a polyether polyol having a number average molecular weight of 600 Daltons, which is commercially available from BASF. In some embodiments the polyether polyol may have a molecular weight of at least 4,000 Daltons. In an alternative example, the polyether polyol may have a molecular weight of no more than about 4,000 Daltons, preferably less than about 3,000 Daltons.

In one embodiment, the polyether polyol triblock copolymer according to the present disclosure can have a weight average molecular weight below 4,000 Daltons. In one non-limiting embodiment of the present disclosure, the weight average molecular weight of the polyether polyol block copolymer can vary in the range of from 100 Daltons to 2,000 Daltons or from 2,000 Daltons to 4,000 Daltons. In other non-limiting embodiments, the weight average molecular weight of the polyether polyol may be less than 3,000 Daltons, preferably less than 2,500 Daltons. In a further example, the weight average molecular weight of the polyether polyol may be about 1,000-2,300 Daltons.

In terms of ratio of the weighted average molecular weight of the various blocks of the polyether polyol, preferably the ratio is no more than about 2:1, more preferably no more than about 1.5:1, and even more preferably no more than about 1.2:1.

Another property of interest of the polyether polyol may be its HLB (hydrophilic-lipophilic balance) value. Preferably, the polyol has an HLB value of no more than 20. Specific embodiments may have HLB values in one of the following ranges: about 5-20, about 6-15, about 7-12 or about 8-10.

In addition to the polyether polyol block copolymer, the component A comprising a compound reactive toward isocyanates can further comprise polyhydric alcohols or polyols. The polyols having from 2 to 15 carbons atoms can suitably be used, for example, ethylene glycol, 1,2-propylene glycol, 1,3-propylene glycol, 1,4-butane diol, 2,3-butane diol, 1,5-pentane diol, glycerol and the like. Other suitable and non-limiting examples of such polyols can also include, phosphate diol, aromatic polyols such as Catechol, Resorcinol, hydroquinone, 1,5-dihydroxynaphthalene, 2,6-dihydroxynaphthalene, 2,7-dihydroxynaphthalene, 1,6-dihydroxynaphthalene, 2,2'-biphenol, 4,4'-biphenol, Bisphenol A, Bisphenol F, Bisphenol S, Bisphenol H, Bisphenol A ethoxylates, Bisphenol A propoxylates, 2,5-bis(hydroxymethyl)furan, 3,4-bis(hydroxymethyl)furan, 2,6-pyridinedimethanol, 1,3-benzenedimethanol, 1,4-benzenedimethanol, and 1,4-benzenediethanol.The amount of such polyhydric alcohols or polyols can vary from about 0 wt.% to 40 wt.%, or from about 1 wt.% to about 40 wt.%, or from about 1 wt.% to about 10 wt.%, based on the total weight of the adhesive composition.

Optionally the component A comprising a compound reactive toward isocyanates may include a polyester polyol. The polyester polyol may be used in place of or in conjunction with the polyether polyol. In the case the polyester polyol and the polyether polyol are used in conjunction, the wt% of the polyether polyol is at least about 5 wt%.

The polyols based on polyesters (also called polyester polyols) can include amorphous and liquid polyester polyols, fatty acid polyester polyols such as castor oil and vegetable oils having different molecular weights and functionalities.

Examples of the fatty acid polyester polyols may include castor oil, the products of hydroxylation of unsaturated or polyunsaturated natural oils, the products of hydrogenations of unsaturated or polyunsaturated polyhydroxyl natural oils, polyhydroxyl esters of alkyl hydroxyl fatty acids, polymerized natural oils, soybean polyol, alkylhydroxylated amides of fatty acids, and cashew nutshell liquid.

The polyester polyols can be formed as reaction products of one or more carboxylic acids with one or more polyols such as diols and/or triols. The carboxylic acids useful in forming the polyester polyols can include, but are not limited to, adipic, glutaric, succinic, malonic, oxalic acids and mixtures thereof. The diols useful in forming the polyester polyols can include, but are not limited to, ethylene glycol, propanediol, butanediol, neopentyldiol, pentanediol and hexanediol and mixtures thereof. The triols which are considered useful in forming the polyester polyol can include trimethylol propane.

In one non-limiting embodiment, the polyester polyol can be obtained from a reaction of a triol with azelaic acid. The triol can be glycerol. One example of such polyester polyol is Emerox^{®} 14001, which is derived from natural oils and commercially available from Emery Oleochemicals Company.

Other examples of suitable polyester polyols include polyglycols dicarboxylates, polycaprolactone polyols, polycaprolactone and combinations thereof. Useful polyester polyols may be prepared from the reaction product of polycarboxylic acids, their anhydrides, their esters or their halides, and a stoichiometric excess polyhydric alcohols (polyols). Suitable polycarboxylic acids include dicarboxylic acids and tricarboxylic acids including, e.g., aromatic dicarboxylic acids, anhydrides and esters thereof (e.g. terephthalic acid, isophthalic acid, dimethyl terephthalate, diethyl terephthalate, phthalic acid, phthalic anhydride, methylhexahydrophthalic acid, methyl- hexahydrophthalic anhydride, methyl-tetrahydrophthalic acid, methyl - tetrahydrophthalic anhydride, hexahydrophthalic acid, hexahydrophthalic anhydride, and tetrahydrophthalic acid), aliphatic dicarboxylic acids and anhydrides thereof (e.g. maleic acid, maleic anhydride, succinic acid, succinic anhydride, glutaric acid, glutaric anhydride, adipic acid, hexanoic acid, pimelic acid, suberic acid, azelaic acid, sebacic acid, chlorendic acid, 1,2,4-butane-tricarboxylic acid, decanedicarboxylic acid, octadecanedicarboxylic acid, dimeric acid, dimerized fatty acids, trimeric fatty acids, and fumaric acid), and alicyclic dicarboxylic acids (e.g. 1,3-cyclohexanedicarboxylic acid, and 1,4-cyclohexanedicarboxylic acid).

Additionally examples of suitable polyols from which polyester polyols can be derived include aliphatic polyols, e.g., ethylene glycols, propane diols (e.g., 1,2-propanediol and 1,3-propanediol), butane diols (e.g., 1,3-butanediol, 1,4-butanediol,), pentane diols (e.g., 1,5-pentanediol), 1,6-hexanediol, 1,8-octanediol, 1,10-decanediol, neopentyl glycol, diethylene glycol, triethylene glycol, tetraethylene glycol, polyethylene glycols, propylene glycol, polypropylene glycols (e.g., dipropylene glycol and tripropylene glycol), 1,4-cyclohexanedimethanol, 1,4-cyclohexanediol, dimer diols, bisphenol A, bisphenol F, hydrogenated bisphenol A, hydrogenated bisphenol F, glycerol, tetramethylene glycol, polytetramethylene glycol, 3-methyl-l,5-pentanediol, 1,9-nonanediol, 2-methyl-1,8-octanediol, trimethylolpropane, glycerin, pentaerythritol, sorbitol, glucose, and combinations thereof.

Preferably, the polyester polyol may be amphiphilic. The above properties regarding the polyether polyol are equally applicable to the polyester polyol, whether used with or without the polyether polyol.

The number average molecular weight of the polyester polyol is typically varied from about 1,000 to about 20,000 Daltons, or in a range of about 1,300-10,000 Daltons. Admex^{™} 525 polyol (commercially available from Eastman Chemical Company) is a 1,400-molecular-weight polyester polyol and may be used.

In another specific embodiment, the component A may have a number average molecular weight of at least about 15,000 Daltons, preferably at least about 20,000 Daltons, even more preferably at least about 50,000 Daltons and most preferably more than about 80,000 Daltons. An example of a polyol with a number average molecular weight of least about 15,000 Daltons is Hyperlite^{®} E-855 polyoxyalkylene polyol.

The molar ratio of the component B (preferably the polyisocyanate) to the component A (preferably the polyol) may be more than about 1:1, preferably at least about 2:1, further preferably at least about 5:1, even more preferably at least about 10:1, and most preferably up to about 20:1 (such as from 1:1 to 20:1, preferably 2:1 to 20: 1, further preferably 5:1 to 20:1, more preferably 10: 1 to 20:1).

Examples of the NCO content of the polyurethane adhesive composition may be at least about 5%, preferably at least about 10%, more preferably at least about 15%, further preferably up to about 25% and even more preferably no more than about 23%. In particular, the NCO content may be from about 5 to about 25%, or about 5 to about 23%, or about 10 to about 25%, or about 10 to about 23%, or about 15 to about 25%, or about 15 to about 23%.

The adhesive composition described herein may include a rheology modifier, preferably the rheology modifier comprises fumed silica, further preferably an amount of the fumed silica comprises no more than about 7 wt%, more preferably no more than about 5 wt%, even more preferably no more than about 3 wt%, most preferably at least about 1 wt% (such as about 1-7 wt%, or about 1-5 wt%, or about 1-3 wt%). Optionally, the adhesive composition may include one or more further rheology modifiers. Preferably the further rheology modifier includes a carbon content of at least 3% by weight. Preferably, the carbon content will include long chain carbon side groups. Rheology modifiers with the at least 3% carbon content may function as a thickening agent, increasing the viscosity of the adhesive composition. Such rheology modifiers may also improve the shear properties of the adhesive composition. An example of a suitable rheology modifier is polydimethylsiloxane. Other examples of possible rheology modifiers can include, but are not limited to, bentonites, hectorites, colloidal silicas, attapulgite, precipitated calcium carbonate, montmorillonite, fibers, zirconates, aluminates, cellulosics, polysaccharides, and polyamides. They may for example be present in an amount from about 0.01 wt% to 5.0 wt% based on the total weight of the adhesive composition.

The adhesive composition according to the present disclosure may further comprise fillers. Suitable examples of fillers can include, but are not limited to, calcium carbonate, silica, barium sulfate, alumina trihydrate (ATH), clay, calcium sulfate, talcum powder, mica powder, carbon black, graphite, glass fibers, molecular sieves. Further, the fillers can be present in an amount of from about 2.0 wt% to about 50 wt%, based on the total weight of the adhesive composition. Exemplary filler amounts may include up to about 10 wt%, up to about 20 wt%, up to about 30 wt% and up to about 40 wt%. In some embodiments, the adhesive composition may comprise less than 1 wt% fillers or may be free of fillers.

The adhesive composition according to the present disclosure further optionally comprises activators. Number of aliphatic and aromatic amines can be used as activators for the purpose of the present disclosure. Suitable examples of such compounds can include, but are not limited to, diaminobicyclooctane (DABCO), 2,2'-dimorpholinodiethylether (DMDEE), trimethylaminioethylethnolamine, N,N,N',N',N"-pentamethyldiethylenetriamine, N-ethylmorpholine, 2-methyl-2-azanorborane, and guanidines. Other examples of the activators can include, but are not limited to, organometallic compounds based on titanium, zinc, bismuth, or zirconium metals, such as, dibutyltin dilaurate, dibutyltin diacetate, stannous octoate, dibutyltin dimercaptide, zinc neodecanoate, zinc octoate, bismuth carboxylate, zirconium octoate and different ligand chemistries surrounding catalytic metal center; alkali metal salts of carboxylic acids and phenols, such as, calcium, magnesium, strontium, or barium salts of hexanoic, octanoic, naphthenic, or linolenic acid. The activators can be present in an amount of from about 0.01 to about 1.0 wt%, based on the total weight of the adhesive composition.

The adhesive composition according to the present disclosure may further comprise at least one further additive. The amount of further additives can vary in the range of from about 0.01 wt% to 5.0 wt%, based on the total weight of the adhesive composition. The further additives can for example include defoamers. Suitable examples of the defoamers can include, but are not limited to, polysiloxane compounds such as polysiloxane-polyalkylene copolymers.

Optionally the adhesive composition may also include one or more surfactants. The surfactant may be a non-functional or functionalized surfactant.

The adhesive composition may comprises less than 2 wt% of a small molecule wherein the small molecule comprises at least one of tris-chloroisopropyl-phosphate (TCPP), tris(1,3-dichloroisopropyl)phosphate (TDCPP), tris-chloroethyl-phosphate (TCEP) and combinations thereof, preferably no more than 1 wt%, more preferably less than 0.5 wt%, even more preferably no more than 0.02 wt%.

The adhesive composition also may contain less than 10 wt% of water, preferably less than about 1 wt% of water, more preferably no more than 0.02 wt%, even more preferably, the composition is devoid of water.

Preferably, the adhesive composition comprises less than about 1 wt% of a formaldehyde containing compound and/or a formaldehyde forming compound upon the application of heat to the composition, preferably less than about 0.5 wt%, more preferably less than about 0.1 wt%, even more preferably no more than 0.02 wt%. More preferably, the adhesive composition comprises or is a formaldehyde free adhesive composition.

The adhesive compositions disclosed herein may have a viscosity less than about 1,000,000 cP, preferably less than about 500,000 cP, further preferably less than about 100,000 cP, more preferably less than about 50,000 cP, even more preferably no more than about 30,000 cP or preferably about 5,000- 30,000 cP, more preferably about 6,000-25,000 cP, even more preferably no more than about 20,000 cP (in particular about 6,000 to 20,000 cP).

### One-Component Polyurethane Moisture Cure Composition

In a preferred embodiment the adhesive composition is a moisture cure adhesive, preferably a one-component polyurethane moisture cure adhesive composition. More particularly, the one-component moisture cure polyurethane adhesive composition should comprise a composition having free NCO groups, more particularly a polymer having free NCO groups. The polymer may be obtainable from reacting at least one component A comprising a compound reactive toward isocyanates (in particular a polyol) and at least one component B comprising an isocyanate.

### Two-Component Polyurethane Moisture Cure Composition

In another preferred embodiment the adhesive composition is a moisture cure adhesive, preferably a two-component polyurethane moisture cure adhesive composition. The two-component polyurethane moisture cure adhesive composition comprises a prepolymer having free NCO groups, preferably terminal end groups. More particularly, regarding the two-component moisture cure polyurethane adhesive the prepolymer may be obtainable from reacting at least one component A comprising a compound reactive toward isocyanates (in particular, a polyol) and at least one component B comprising an isocyanate, preferably in less than the stoichiometric amount. The second component includes a compound reactive toward isocyanates such as a polyol.

### Substrate

The disclosure is applicable to substrates suitable for bonding with a moisture cure adhesive, preferably a polyurethane moisture cure adhesive.

According to the present disclosure, the first substrate, or the second substrate, or both substrates independently, or both substrates, may be a substrate as described herein.

Preferred substrates are substrates which benefit from the use of a primer to achieve sufficient adhesion. A preferred substrate is a lignocellulosic substrate. A more preferred substrate is a wooden substrate such as but not limited to an engineered wooden substrate (aka engineered wood). Any wood species that is capable of being bonded with the aid of moisture cure adhesives, preferably polyurethane adhesive compositions, may be used in the methods disclosed herein (and in particular with the primer composition, preferably aqueous primer composition, described herein). As examples of suitable wood species, Southern pines, Australian Slash pines, Ponderosa pines, Western White pines, Larch, Eucalyptus, Ash, Beech, Birch, coastal Douglas fir and inland Douglas fir may be mentioned. Particularly preferred wood species include Southern Yellow pine (SYP) and Douglas fir (DF). Combinations of these species may optionally be used in preparing a given lignocellulosic composite article, but it is generally preferred to use one species alone.

The substrate(s) may advantageously be wood boards. In one embodiment wood boards that have been chemically treated, for example acetylated wood (that is wood treated with acetic anhydride) may be adhered using the disclosed adhesive and primer. This is particularly useful to laminate or finger joint a plurality of acetylated wood boards to form a structure such as a wood beam.

In an embodiment, the air-dry density of the wood to be bonded is higher than 0.55 g/cm³ and preferably higher than 0.6 g/cm³.

Wood which has been aged for a long period, which has been dried at high temperatures or which has been over-dried can have reduced hygroscopicity and can exhibit reduced wettability. The substrate surface may be inactivated by these treatments, which can also bring wood extractives to the surface which might detrimentally affect later substrate adhesion. It is therefore preferred for the lignocellulosic substrates to have been subjected to low temperature drying techniques, such as drying at below 150°C or freeze-drying. Alternatively or additionally, the lignocellulosic substrate may be pre-treated prior to the application of the primer composition thereto to remove any inactivated surface layers and/or remove extractives. The effectiveness of a given pre-treatment in improving the wettability of the substrate surface is dependent on the wood species but may include: brushing and/or planing the surface; treatment of the surface with polar and non-polar solvents; and chemical treatment with sodium hydroxide, calcium hydroxide, nitric acid, and hydrogen peroxide.

In specific embodiments, lignocellulosic substrates with poorly defined geometry, such as chipboards, fiberboards and particleboards, may be adhered to form the laminates, the preferred lignocellulosic substrates include whole boards, half-edged boards, squares, wood strips and/or wood veneers which have been cut or shaped for the purposes of being fitted together in a definite and pre-determined relative geometric relationship in the final laminate. Concomitantly, a non-exhaustive list of preferred laminates are laminates containing at least two wood boards, half-edged boards, squares, wood veneers or wood strips that have been laminated together.

### Methods of making the laminate

The moisture cure adhesive may be applied on the surface by any methods known to the skilled person.

### Methods of applying the primer

The primer composition may be applied on the surface by conventional application methods such as flooding, dipping, brushing, roll coating, doctor-blade application, printing methods, air-atomized spray, air-assisted spray, airless spray, high volume low pressure spray, air-assisted airless spray and high-speed rotation bell.

In an embodiment, the viscosity of the primer composition may be from 0.005 to 1 Pa s (50 cPs to 1000 cPs), as measured using a Brookfield viscometer at 25°C. For an embodiment, the viscosity of the primer composition may vary depending on the application methods.

In any event, the primer composition should generally be applied to the surface(s) to be bonded in an amount of (i.e. at an application rate of) from at least about 3 g/ft², preferably at least about 5 g/ft², more preferably at least about 8 g/ft², even more preferably at least about 10 g/ft². In some preferred embodiments, the primer composition is applied to the surface(s) at an application rate of at least about 5 g/ft², preferably at least about 6 g/ft², more preferably at least about 8 g/ft², further preferably at least about 10 g/ft².

The primer composition may be allowed to penetrate the surface before the application of the adhesive thereto. Exemplary penetration times may depend on the amount of primer composition applied and the density, moisture content and morphology of the substrate, preferably engineered wooden substrate, more preferably lignocellulosic material. Generally a penetration time of less than 15 minutes -for example of from 1 to 10, or from 1 to 5 minutes, or from 1 to 3 minutes-should be allowed under standard conditions (20°C, 65% Relative Humidity). Suitable penetration times may be less than about 3 minutes, less than about 2 minutes and less than about 1 minute.

The applying of the primer preferably occurs at a rate of at least about 350 fpm, more preferably at least about 400 fpm, more preferably at least about 450 fpm, further preferably at least about 500 fpm, even more preferably at least about 550 fpm, even further preferably at least about 600 fpm, and more preferably at least about 650 fpm. The applying may occur at a rate up to about 800 fpm. For example, the applying rate may be from about 350 to about 800 fpm, preferably about 400 to about 800 fpm, more preferably about 450 to about 800 fpm, more preferably about 500 to about 800 fpm, further preferably about 550 to about 800 fpm, even more preferably about 600 to about 800 fpm, even more preferably about 650 to about 800 fpm.

### Contacting step

Preferably, the contacting of the primer composition on the second substrate to the moisture cure adhesive on the first substrate comprises crowding the first and the second substrates.

In preferred embodiments, the contacting occurs within less than 15 minutes of the step of applying the primer on the surface, preferably within about 10 minutes, more preferably less than about 5 minutes, further preferably no more than, or less than, about 3 minutes, even more preferably no more than about 2 minutes, further preferably no more than about 1 minute, further preferably less than about 1 minute, after the applying of the primer. In some embodiments, the contacting may occur from 1 to 3 minutes after the applying of the primer. In particular embodiments, the contacting is preferably a crowding step, and occurs within less than about 5 minutes, preferably less than about 3 minutes, more preferably no more than about 2 minutes, further preferably no more than about 1 minute, even more preferably less than about 1 minute, after the applying of the primer.

In other preferred embodiments, the contacting occurs while the primer on the second substrate visually appears not dry.

In further preferred embodiments, the contacting occurs prior to the primer drying, preferably the primer visually appears damp.

The contacting preferably includes applying a pressure to the first and second substrate of at least about 15 psi, preferably at least about 50 psi, more preferably at least about 100 psi, further preferably at least about 150 psi, even more preferably at least about 200 psi, even further preferably at least about 250 psi and most preferably no more than about 500 psi. The applied pressure may be from about 15 psi to about 500 psi, preferably from about 50 psi to about 500 psi, more preferably from about 100 psi to about 500 psi, more preferably from about 150 psi to about 500 psi, further preferably from about 200 psi to about 500 psi, even more preferably from about 250 psi to about 500 psi. In particular embodiments, the contacting is preferably a crowding step, and occurs at a pressure of at least about 100 psi, preferably at least about 150 psi, even more preferably at least about 200 psi, even further preferably at least about 250 psi, most preferably at least about 300 psi.

The contacting preferably occurs at a rate of at least about 350 fpm, more preferably at least about 400 fpm, more preferably at least about 450 fpm, further preferably at least about 500 fpm, even more preferably at least about 550 fpm, even further preferably at least about 600 fpm, and more preferably at least about 650 fpm. The contacting may occur at a rate up to about 800 fpm. For example, the contacting rate may be from about 350 to about 800 fpm, preferably about 400 to about 800 fpm, more preferably about 450 to about 800 fpm, more preferably about 500 to about 800 fpm, further preferably about 550 to about 800 fpm, even more preferably about 600 to about 800 fpm, even more preferably about 650 to about 800 fpm.

Preferably, the contacting occurs at a rate of forming more than about 20 joints/minute, preferably more than about 30 joints/minute, more preferably more than about 45 joints/minute, more preferably at least about 60 joints/minute, more preferably at least about 75 joints/minute, more preferably at least about 80 joints/minute, further preferably at least about 100 joints/minute, even more preferably at least about 125 joints/minute, even further preferably at least about 150 joints/minute. In particular embodiments, the contacting is preferably a crowding step, and occurs at a rate of more than about 20 j oints/minute, preferably at least about 75 joints per minute, more preferably at least about 100 joints per minute, more preferably at least about 125 joints per minute.

Preferably, the contacting step comprises forming a joint selected from finger joints, butt joints, route joints, lap joints, v-groove joints and combination thereof. In an embodiment, the first and second substrates are contacted to form a finger joint.

The methods of the disclosure may comprise one or more additional steps, preferably one or more additional processing steps.

In particular, the methods may comprise a step of: a/ planing at least one of the first substrate, the second substrate, the laminate and combinations thereof.

Additionally or alternatively, the methods may comprise a step of: b/ cutting at least one of the first substrate, the second substrate, the laminate and combinations thereof.

Additionally or alternatively, the methods may comprise a step of: c/ transporting at least one of the first substrate, the second substrate, the laminate and combinations thereof.

Additionally or alternatively, the methods may comprise a step of: d/ profiling at least one of the first substrate, the second substrate, the laminate and combinations thereof.

Additionally or alternatively, the methods may comprise a step of: e/ surfacing at least one of the first substrate, the second substrate, the laminate and combinations thereof.

The methods of the disclosure may comprise at least one, or at least two, or at least three, or at least four, or at least five (i.e. all) of the above additional steps a/, b/, c/, d/ and e/.

More particularly, the methods disclosed herein may comprise a step of transporting the laminate at line speed of at least about 500 fpm, preferably at least about 550 fpm, more preferably at least about 600 fpm, further preferably at least about 650 fpm and even more preferably at least about 700 fpm.

Advantageously, the failure rate achieved with the methods disclosed herein is no more than about 10%, preferably no more than about 8%, more preferably no more than about 5%, further preferably less than about 3%, even more preferably less than about 2%, even further preferably no more than about 1%. In some embodiments, the failure rate of the methods is less than about 10%, preferably less than about 7%, further preferably less than about 5%, more preferably less than about 1%.

Practicing the methods included herein, especially the application of the primer composition to the substrate surface, in particular a wooden substrate surface, serves to improve the adhesion strength and specifically the wet adhesion strength of the subsequently applied moisture cure adhesive composition (in particular, polyurethane adhesive composition). This enables the laminate obtained by the above defined process to meet the standards set for structural wood products. In particular, the laminates can meet or surpass the requirements of European Standard EN 391:2001, Canadian Standard Association (CSA) Standard 112.9 and/or American Society for Testing Materials (ASTM) D2559.

Advantages of the practicing the methods included herein may include one or more of the following: (1) improve production rate of the laminate, (2) improve quality of the laminate, (3) reduce production waste, (4) utilize additional scrap wood into mass timber structural products, (5) lower the cost of making the laminate product, (6) improve bond strength, (7) reduce cost of adhesive and (8) reduce the failure rate of the laminate making process.

### ASPECTS

A 1^{st} aspect of the disclosure includes a method of making a laminate comprising:
a. Providing a first substrate having a moisture cure adhesive on a first surface of the first substrate;
b. Applying a primer at an application rate of at least about 5 g/ft² to a first surface of a second substrate, preferably the application rate comprises (or is) at least about 6 g/ft², more preferably at least about 8 g/ft², further preferably at least about 10 g/ft²,
c. Contacting the primer on the second substrate to the moisture cure adhesive on the first substrate.

In a 2^{nd} aspect applicable to the 1^{st} aspect, the contacting occurs within less than 15 minutes of the applying, preferably within about 10 minutes, more preferably less than about 5 minutes, further preferably less than about 3 minutes, even more preferably no more than about 2 minutes, further preferably no more than about 1 minute after the applying.

In a 3^{rd} aspect applicable to aspects 1-2, the contacting occurs while the primer on the second substrate visually appears not dry.

In a 4^{th} aspect applicable to aspects 1-3, the contacting occurs prior to the primer drying, preferably the primer visually appears damp.

In a 5^{th} aspect applicable to aspects 1-4, the contacting includes an application of at least about 15 psi of pressure applied to the first and second substrates, preferably the pressure comprises at least about 50 psi, more preferably at least about 100 psi, further preferably at least about 150 psi, even more preferably at least about 200 psi, even further preferably at least about 250 psi and most preferably no more than about 500 psi.

In a 6^{th} aspect applicable to aspects 1-5, the contacting comprises crowding the first and the second substrates.

A 7^{th} aspect of the disclosure includes a method of making a laminate comprising:
a. Providing a first substrate having a moisture cure adhesive on a first surface of the first substrate;
b. Applying a primer at an application rate of at least about 3 g/ft² to a first surface of a second substrate, preferably the application rate comprises (or is) at least about 5 g/ft², more preferably at least about 8 g/ft², further preferably at least about 10 g/ft²,
c. Crowding the primer on the second substrate to the moisture cure adhesive on the first substrate, thereby forming the laminate,
d. Transporting the laminate at line speed of at least about 500 fpm, preferably at least about 550 fpm, more preferably at least about 600 fpm, further preferably at least about 650 fpm and even more preferably at least about 700 fpm,
wherein a failure rate of the method comprises less than about 10%, preferably less than about 7%, further preferably less than about 5%, more preferably less than about 1%.

In an 8^{th} aspect applicable to aspects 6-7, the crowding occurs within less than about 5 minutes, further preferably less than about 3 minutes, even more preferably no more than about 2 minutes, further preferably no more than about 1 minute after the applying.

In a 9^{th} aspect applicable to aspects 6-8, the crowding occurs while the primer on the second substrate visually appears not dry.

In a 10^{th} aspect applicable to aspects 6-9, the crowding occurs prior to the primer drying, preferably the primer visually appears damp.

In a 11^{th} aspect applicable to aspects 6-10, the crowding occurs at a rate of more than about 20 joints/minute, preferably at least about 75 joints per minute, more preferably at least about 100 joints per minute, more preferably at least about 125 joints per minute.

In a 12^{th} aspect applicable to aspects 6-11, the crowding occurs at a pressure of at least about 100 psi, further preferably at least about 150 psi, even more preferably at least about 200 psi, even further preferably at least about 250 psi, most preferably at least about 300 psi.

In a 13^{th} aspect applicable to aspects 1-12, the moisture cure adhesive comprises, or is, a polyurethane adhesive.

In a 14^{th} aspect applicable to aspect 13, the polyurethane moisture cure adhesive comprises either a 1-component adhesive or a 2-component adhesive.

In a 15^{th} aspect applicable to aspects 1-14, an assembly time of the moisture cure adhesive comprises (or is) no more than about 30 minutes, preferably no more than about 20 minutes, more preferably no more than about 15 minutes, further preferably no more than about 10 minutes, even more preferably less than about 6 minutes.

In a 16^{th} aspect applicable to aspects 1-15, the primer comprises a surfactant.

In a 17^{th} aspect applicable to aspect 16, the primer comprises, or is, an aqueous composition comprising up to about 25 wt% of the surfactant, more preferably up to about 10 wt%, further preferably up to about 5 wt%, even more preferably at least about 1 wt%, even further preferably at least about 2 wt%.

In a 18^{th} aspect applicable to aspects 16-17, the surfactant comprises at least one of an anionic surfactant, a nonionic surfactant, amphoteric surfactant and combinations thereof.

In a 19^{th} aspect applicable to aspects 16-18, the surfactant comprises (or is) at least one polyol, more preferably the polyol comprises (or is) a water soluble polyol.

In a 20^{th} aspect applicable to aspects 16-19, the surfactant comprises a blend of at least two of an anionic surfactant, a nonionic surfactant and an amphoteric surfactant.

In a 21^{st} aspect applicable to aspects 16-20, the surfactant may be functional or non-functional.

In a 22^{nd} aspect applicable to aspects 16-21, the surfactant comprises, or is, at least one of the surfactants described herein or any combination thereof.

In a 23^{rd} aspect applicable to aspects 16-22, the surfactant comprises at least one surfactant selected from the group consisting of siloxane-based surfactants; alkyl polyglucosides, such as alkylpolysaccharides; alkoxylated fatty acids; alkoxylated alcohols; alkylsulfosuccinates; acetylenic diol-based surfactants; alkyl ethoxylates, such as alkyl phenol ethoxylates; and mixtures thereof.

In a 24^{th} aspect applicable to aspects 1-23, at least one of the first substrate, the second substrate or both comprise a wooden substrate, preferably an engineered wood substrate.

In a 25^{th} aspect applicable to aspects 1-24, the contacting or the crowding comprises forming at least one of a finger joint, butt joint, route joint, lap joint or a v-groove joint.

In a 26^{th} aspect applicable to aspects 1-25, the method further comprises at least one additional processing step, preferably the additional processing step comprises at least one of:
a. planing at least one of the first substrate, the second substrate, the laminate and combinations thereof,
b. cutting at least one of the first substrate, the second substrate, the laminate and combinations thereof,
c. transporting at least one of the first substrate, the second substrate, the laminate and combinations thereof,
d. profiling at least one of the first substrate, the second substrate, the laminate and combinations thereof,
e. surfacing at least one of the first substrate, the second substrate, the laminate and combinations thereof,
further preferably the method comprises at least two of the planing, the cutting, the profiling, the surfacing and the transporting.

In a 27^{th} aspect applicable to aspects 1-26, at least one of the applying, the contacting or the crowding, and combinations thereof occurs at a rate of at least 350 fpm, preferably at least about 400 fpm, more preferably at least about 450 fpm, further preferably at least about 500 fpm, even more preferably at least about 550 fpm, even further preferably at least about 600 fpm, and more preferably at least about 650 fpm, or alternatively up to about 800 fpm.

In a 28^{th} aspect applicable to aspects 1-27, the contacting or the crowding occurs at a rate of forming more than about 20 joints/minute, preferably more than about 30 joints/minute, more preferably more than about 45 joints/minute, more preferably at least about 60 joints/minute, more preferably at least about 75 joints/minute, more preferably at least about 80 joints/minute, further preferably at least about 100 joints/minute, even more preferably at least about 125 joints/minute, even further preferably at least about 150 joints/minute.

In a 29^{th} aspect applicable to aspects 1-28, a failure rate comprises no more than about 10%, preferably no more than about 8%, more preferably no more than about 5%, further preferably less than about 3%, even more preferably less than about 2%, even further preferably no more than about 1%.

In a 30^{th} aspect applicable to aspects 1-29, the moisture cure adhesive comprises, or is, a formaldehyde free moisture cure adhesive.

## Claims

1. A method of making a laminate comprising:
a. Providing a first substrate having a moisture cure adhesive on a first surface of the first substrate, preferably the moisture cure adhesive comprises a polyurethane adhesive, more preferably the polyurethane moisture cure adhesive comprises either a 1-component adhesive or a 2-component adhesive, further preferably an assembly time of the moisture cure adhesive comprises no more than about 30 minutes, preferably no more than about 20 minutes, more preferably no more than about 15 minutes, further preferably no more than about 10 minutes, even more preferably less than about 6 minutes;
b. Applying a primer at an application rate of at least about 5 g/ft² to a first surface of a second substrate, preferably the application rate comprises at least about 6 g/ft², more preferably at least about 8 g/ft², further preferably at least about 10 g/ft²,
c. Contacting the primer on the second substrate to the moisture cure adhesive on the first substrate,
i. preferably the contacting occurs within less than 15 minutes of the applying, preferably within about 10 minutes, more preferably less than about 5 minutes, further preferably less than about 3 minutes, even more preferably no more than about 2 minutes, further preferably no more than about 1 minute after the applying;
ii. preferably, the contacting occurs while the primer on the second substrate visually appears not dry; or
iii. preferably, the contacting occurs prior to the primer drying, preferably the primer visually appears damp,
further preferably the contacting comprises crowding the first and the second substrates.

2. The method of claim 1 wherein the primer comprises a surfactant, preferably an aqueous composition comprising up to about 25 wt% of the surfactant, more preferably up to about 10 wt%, further preferably up to about 5 wt%, even more preferably at least about 1 wt%, even further preferably at least about 2 wt%.

3. The method of claim 2 wherein the surfactant comprises at least one of an anionic surfactant, a nonionic surfactant, amphoteric surfactant and combinations thereof, preferably the surfactant comprises at least one polyol, more preferably the polyol comprises a water soluble polyol, even more preferably the surfactant comprises a blend of at least two of the anionic surfactant, the nonionic surfactant and the amphoteric surfactant, or alternatively the surfactant may be functional or non-functional.

4. The method of any one of the preceding claims wherein at least one of the first substrate, the second substrate or both comprise a wooden substrate, preferably an engineered wood substrate.

5. The method of any one of the preceding claims wherein the contacting comprises forming at least one of a finger joint, butt joint, route joint, lap joint or a v-groove joint.

6. The method of any one of the preceding claims further comprising at least one additional processing step, preferably the additional processing step comprises at least one of:
a. planing at least one of the first substrate, the second substrate, the laminate and combinations thereof,
b. cutting at least one of the first substrate, the second substrate, the laminate and combinations thereof,
c. transporting at least one of the first substrate, the second substrate, the laminate and combinations thereof,
d. profiling at least one of the first substrate, the second substrate, the laminate and combinations thereof,
e. surfacing at least one of the first substrate, the second substrate, the laminate and combinations thereof,
further preferably the method comprises at least two of the planing, the cutting, the profiling, the surfacing and the transporting.

7. The method of any one of the preceding claims wherein at least one of the applying, the contacting and combinations thereof occurs at a rate of at least 350 fpm, preferably at least about 400 fpm, more preferably at least about 450 fpm, further preferably at least about 500 fpm, even more preferably at least about 550 fpm, even further preferably at least about 600 fpm, and more preferably at least about 650 fpm, or alternatively up to about 800 fpm.

8. The method of any one of the preceding claims wherein the contacting occurs at a rate of forming more than about 20 joints/minute, preferably at least about 60 joints/minute, more preferably at least about 75 joints/minute, more preferably at least about 80 joints/minute, further preferably at least about 100 j oints/minute, even more preferably at least about 125 joints/minute, even further preferably at least about 150 joints/minute.

9. The method of any one of the preceding claims wherein a failure rate comprises no more than about 10%, preferably no more than about 8%, more preferably no more than about 5%, further preferably less than about 3%, even more preferably less than about 2%, even further preferably no more than about 1%.

10. The method of any one of the preceding claims wherein the contacting includes an application of at least about 15 psi of pressure applied to the first and second substrates, preferably the pressure comprises at least about 50 psi, more preferably at least about 100 psi, further preferably at least about 150 psi, even more preferably at least about 200 psi, even further preferably at least about 250 psi and most preferably no more than about 500 psi.

11. The method of any one the preceding claims 2-10 wherein the surfactant comprises at least one of the surfactants described herein or any combination thereof.

12. The method of any one the preceding claims 2-11 wherein the surfactant comprises at least one surfactant selected from the group consisting of siloxane-based surfactants; alkyl polyglucosides, such as alkylpolysaccharides; alkoxylated fatty acids; alkoxylated alcohols; alkylsulfosuccinates; acetylenic diol-based surfactants; alkyl ethoxylates, such as alkyl phenol ethoxylates; and mixtures thereof.

13. The method of any one of the preceding claims wherein the moisture cure adhesive comprises a formaldehyde free moisture cure adhesive.

14. A method of making a laminate comprising
a. Providing a first substrate having a moisture cure adhesive on a first surface of the first substrate, preferably the moisture cure adhesive comprises a polyurethane adhesive, more preferably the polyurethane moisture cure adhesive comprises either a 1 component adhesive or a 2 component adhesive, further preferably an assembly time of the moisture cure adhesive comprises no more than about 30 minutes, preferably no more than about 20 minutes, more preferably no more than about 15 minutes, further preferably no more than about 10 minutes, even more preferably less than about 6 minutes;
b. Applying a primer at an application rate of at least about 3 g/ft² to a first surface of a second substrate, preferably the application rate comprises at least about 5 g/ft², more preferably at least about 8 g/ft², further preferably at least about 10 g/ft²,
c. Crowding the primer on the second substrate to the moisture cure adhesive on the first substrate, thereby forming the laminate, wherein
i. preferably the crowding occurs within less than about 5 minutes, further preferably less than about 3 minutes, even more preferably no more than about 2 minutes, further preferably no more than about 1 minute after the applying;
ii. preferably, the crowding occurs while the primer on the second substrate visually appears not dry; or
iii. preferably, the crowding occurs prior to the primer drying, preferably the primer visually appears damp,
preferably the crowding occurs at a rate of more than about 20 joints/minute, preferably at least about 75 joints per minute, more preferably at least about 100 joints per minute, more preferably at least about 125 joints per minute,
d. Transporting the laminate at line speed of at least about 500 fpm, preferably at least about 550 fpm, more preferably at least about 600 fpm, further preferably at least about 650 fpm and even more preferably at least about 700 fpm,
wherein a failure rate of the method comprises less than about 10%, preferably less than about 7%, further preferably less than about 5%, more preferably less than about 1%.

15. The method of claim 14 wherein the crowding occurs at a pressure of at least about 100 psi, further preferably at least about 150 psi, even more preferably at least about 200 psi, even further preferably at least about 250 psi, most preferably at least about 300 psi.
